(19) Europäisches Patentamt
European Patent Office
Office européen des brevets

(11) EP 4 294 196 B1

(12) EUROPEAN PATENT SPECIFICATION

(45) Date of publication and mention of the grant of the patent:
**19.03.2025 Bulletin 2025/12**

(21) Application number: **22709419.0**

(22) Date of filing: **22.02.2022**

(51) International Patent Classification (IPC):
***A23C 19/082*** *(2006.01)* ***A23J 3/10*** *(2006.01)*
***A23J 3/22*** *(2006.01)* ***A23J 3/28*** *(2006.01)*
***A23L 29/256*** *(2016.01)*

(52) Cooperative Patent Classification (CPC):
**A23L 29/256; A23C 19/082; A23J 3/10; A23J 3/227; A23J 3/285;** A23L 33/16; A23L 33/19; A23L 33/21

(86) International application number:
**PCT/NL2022/050099**

(87) International publication number:
**WO 2022/177440 (25.08.2022 Gazette 2022/34)**

# (54) MILK-PROTEIN BASED MEAT SUBSTITUTE

AUF MILCHPROTEIN BASIERENDER FLEISCHERSATZ

SUBSTITUT DE VIANDE À BASE DE PROTÉINE DE LAIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2021 EP 21158409**

(43) Date of publication of application:
**27.12.2023 Bulletin 2023/52**

(73) Proprietor: **Dairy Protein Cooperation Food B.V.**
**2411 HS Bodegraven (NL)**

(72) Inventor: **LAVRIJSEN, Bas Willem Maarten**
**2411 HS Bodegraven (NL)**

(74) Representative: **V.O.**
**P.O. Box 87930**
**2508 DH Den Haag (NL)**

(56) References cited:
**EP-A1- 1 759 593**
**EP-A2- 0 174 192**
**EP-B1- 1 771 085**
**AU-B2- 2008 200 828**
**SE-B- 375 227**
**US-A1- 2011 171 359**
**US-A1- 2015 351 427**
**US-A1- 2020 029 590**
**US-A1- 2020 323 230**

- **THANGAVELU KARTHIKEYAN P ET AL: "Novel processing technologies and ingredient strategies for the reduction of phosphate additives in processed meat", TRENDS IN FOOD SCIENCE AND TECHNOLOGY, ELSEVIER SCIENCE PUBLISHERS, GB, vol. 94, 11 October 2019 (2019-10-11), pages 43 - 53, XP085906714, ISSN: 0924-2244, [retrieved on 20191011], DOI: 10.1016/J.TIFS.2019.10.001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field

The invention relates to the production of meat-replacement products on the basis of the formation of a fibrous structure from milk proteins with alginate.

### Background

A process of the aforementioned type is disclosed in WO 03/061400. Herein milk protein is separated from milk serum (whey) by initially subjecting milk to a cheese-making process, resulting in the formation of curd. The curd is converted into a finely distributed form, and mixed with a calcium-complexing agent (typically phosphate salts, such as typically used as emulsifying salts in making processed cheese), resulting in the formation of a homogenous mass. To this mass a hydrocolloid capable of precipitating with metal cations is added, typically an alginate. A fibrous product is then formed by adding a solution of at least divalent metal ions (typically calcium ions). This prompts the hydrocolloid to start precipitating with said ions, which results in the formation of a fibrous product, which has a meat substitute structure. Variants of this process have been described in EP1588626, EP1643850, EP1643851, EP1771085, US 2015/0351427, SE375227, US 2011/171359, EP1759593, and AU2008200828.

Whilst resulting in a suitable meat-replacement, the known process has several drawbacks. One such drawback is the relatively high amount of salts, such as emulsifying salts, that are needed. This goes against the current tendency, as generally stimulated by health authorities in many countries, to reduce the amounts of salt in food products.

In the above process, the emulsifying salts are needed to remove calcium from the cheese matrix that forms the curd, so as to transfer the curd into a homogenous liquid mass from which fibres can be formed. This concerns not only calcium that is naturally present in milk, but also calcium that is added prior to curd formation. These salts are also necessary to bind calcium prior to the addition of the hydrocolloid. Otherwise, the hydrocolloid will untimely precipitate with calcium ions present. This does not result in the formation of a fibrous structure, or at least not in the formation of fibres having an adequate length to be perceived as meat-like. Rather, the process should allow the precipitation of hydrocolloid with cations to occur in such a manner that such precipitation will result in the formation of a fibrous product. In the aforementioned EP1588626 and EP1643851 some alternative starting materials are described, viz. sodium caseinate, whey protein concentrate, and skimmed milk powder. In EP 1588626 it is claimed that with these materials, the addition of a phosphate material to capture free calcium ions, could be dispensed with. In fact, the same text is found in the interrelated background patent applications WO 2005/004624, WO 2005/004623, and WO 03/061400. No results of fiber formation are given, and in practice premature precipitation does in fact occur.

### Summary

The invention seeks to provide, *inter alia,* a process as above, yet wherein at least part of the emulsifying salts can be dispensed with.

To this end the invention provides, in one aspect, a process for the preparation of a fibrous composition, the process comprising providing a casein-containing milk-based liquid; subjecting said fluid to a treatment step to capture free calcium ions present in said fluid; thereby obtaining a calcium ions-depleted casein liquid, adding a hydrocolloid capable of precipitating with divalent or polyvalent metal cations to the calcium ions-depleted casein liquid, homogenizing so as to obtain a homogenous fibre-generation liquid mass, contacting the fibre-generation liquid mass with an aqueous solution comprising divalent or polyvalent metal cations, thereby forming fibres, wherein said treatment step comprises increasing the temperature of said fluid, particularly to a temperature of at least 60°C, thereby enabling native milk phosphate and/or citrate to capture free calcium ions.

Theinvention is defined by the appended set of claims.

### Detailed description

The process of the invention serves to produce a composition having a fibrous structure, wherein the fibres comprises a precipitated hydrocolloid enclosing available milk components including casein. Hereinafter this composition is briefly referred to as a fibrous composition.

It will be understood that the milk-based nature of the casein-containing liquid presents the skilled person with a problem to be solved. Liquids comprising protein from other sources will not have free calcium ions present, and will therefore not be prone to premature precipitation upon the addition of a hydrocolloid capable of precipitating with divalent or polyvalent metal cations. At the same time, as the inventors believe, the milk-based nature of the casein-containing liquid also presents a key to unlock a solution to said problem.

In the known process to make a fibrous meat replacement from milk protein, the premature precipitation of alginate with calcium ions typically present in casein-containing milk-based fluids such as curd, is prevented by the addition of salts that bind calcium. The invention is based on the judicious insight that said premature precipitation can be prevented by increasing temperature, and preferably also pH. Without wishing to be bound by theory, the inventors believe that this puts to use a phenomenon that during heating of milk, dissolved calcium and phosphate become supersaturated and partly associate with casein micelles. The additional colloidal phosphate so formed has a molar ratio Ca/P ≈ 1. The reaction is believed to be: $Ca^{2+} + H_2PO_4^- \rightarrow CaHPO_4 + H^+$.

Generally, any casein-containing liquid can suitably be used as long as it in such condition that the addition of a hydrocolloid capable of precipitating with metal cations, will not prematurely exhibit such precipitation. This is accomplished by the treatment step as discussed in the present disclosure.

In order to present a milk-based liquid having a preferred relatively high protein content, said liquid is selected from the group consisting of concentrated milk, such as obtained by subjecting milk to evaporation or reversed osmosis, dissolved milk powder, dissolved sodium caseinate, dissolved ammonium caseinate, dissolved milk protein powder obtained from subjecting milk to ultrafiltration, a retentate obtained by subjecting milk to ultrafiltration, dissolved casein powder obtained from subjecting milk to microfiltration, a retentate obtained by subjecting milk to microfiltration, and mixtures thereof. The skilled person is familiar with the various forms of concentration and filtration of milk. Microfiltration generally results in separation casein from at least part of whey protein. Ultrafiltration allows the smaller lactose, water, mineral, and vitamin molecules to pass through the membrane, while the larger protein and fat molecules are retained and concentrated. Usually, milk is skimmed (fat being removed) before microfiltration or ultrafiltration. Also in the process of the invention, preferably skimmed milk is applied.

Preferably, the casein containing milk-based liquid is a micellar casein concentrate. The term "micellar casein concentrate" notifies that casein is present in its native, micellar form in which it is present in milk, yet in a higher concentration calculated on the basis of dry matter solids content. Milk generally has a milk protein content of 3.5 wt.%, approximately 80 wt.% of which is micellar casein,. Taking into account that milk has a dry matter solids content of 12-13 wt.%, the concentration of micellar casein in milk, calculated on the basis of dry matter solids, is generally approximately 21-23 wt.%. It will be understood that a micellar casein concentrate will thus have a micellar casein concentration, based on dry matter solids content, of at least 25 wt.%, such as at least 30 wt.%, such as at least 40 wt.%, preferably at least 50 wt.%, more preferably at least 60 wt.% such as at least 65 wt.%.

Generally, the casein-containing milk-based liquid, being a micellar casein concentrate, is selected from the group consisting of dissolved milk protein powder obtained from subjecting milk to ultrafiltration, a retentate obtained by subjecting milk to ultrafiltration, dissolved casein powder obtained from subjecting milk to microfiltration, a retentate obtained by subjecting milk to microfiltration, and mixtures thereof.

Both microfiltration (MF) and ultrafiltration (UF) of milk as such are known in the field. The skilled person is aware of the applicable equipment and membrane (filter) sizes. Generally, UF removes water and lactose as a filtrate, with casein as well as whey protein retained in the UF retentate. In the event of microfiltration, also whey protein is removed with the filtrate.

Accordingly, the desired condition to form a fibrous structure is to have a homogenous mass comprising casein and comprising said hydrocolloid. The formation of the fibrous mass essentially is to occur as a result of adding metal cations. These are generally provided in the form of an aqueous solution, to the outside surface of the homogenous mass, as a result of which fibres form from said surface. These fibres are then mixed through the homogenous mass, as a result of which the surface of said mass is available to further formation of fibres by the further addition of metal cations on the surface. This process, of controlled fibre formation at the surface of the homogenous mass, and mixing the fibres into the mass, is conducted repeatedly, preferably continuously.

The calcium ions, such as calcium chloride, or other divalent or multivalent metal ions, are added with care so as to control the process of fibre formation. This can be by slowly adding the salts, preferably in the form of an aqueous solution, followed by gentle stirring. Preferably the salts are dosed by spraying an aqueous solution thereof on the outer surface of the homogeneous mixture. For such spraying any spraying equipment can be used. In an interesting embodiment, the spraying is provided from a spraying duct (such as a tube having holes or spray nozzles).

The aforementioned known process requires producing a cheese matrix in the form of curd, and breaking up the cheese matrix by adding calcium-binding salts. The process of the invention essentially allows starting from a milk-based liquid as such. Thus, the process of the invention avoids the laborious additional process sequence of first producing a cheese matrix, such as in making curd, and then breaking-up such cheese matrix.

Without intending to be bound by theory, the present inventors believe that in the known process emulsifying salts need to be added for at least two reasons. A first reason is that, as a source for casein in the end product, a route is chosen via the production of curd. As a result, said salts are needed to turn curd into a processing mass that is sufficiently liquid to be capable of forming a homogenous mass with a hydrocolloid. A second reason is that hydrocolloid tends to precipitate with divalent metal ions, such as calcium ions. This phenomenon is in fact used in the final process step of generating a

fibrous mass. However, in order to produce fibres of a sufficient length, the early precipitation of hydrocolloid with calcium ions is prevented by ensuring the absence of such calcium ions at the point in time at which the hydrocolloid is added. In the pre-existing process, this presents the second reason to add emulsifying salts, i.e., thereby accomplishing the binding of calcium ions prior the addition of the hydrocolloid.

It should further be noted that the production of curd as such generally involves adding additional calcium ions. As a result, the pre-existing process requires the addition of a relatively high amount of emulsifying salts, and these ultimately end up in the final product.

In the present process, not proceeding via curd production, no additional calcium needs to be added. Thus, the process results in a lower demand for calcium-binding salts to begin with. Further, the present process judiciously makes use of salts already present in milk. This allows reducing, or preferably entirely dispensing with, the addition of any salts otherwise needed to capture calcium ions prior to the addition of metal-binding hydrocolloid. This presents a further major departure from the process of the prior art. This has health benefits, viz. a naturally lower amount of salts, as well as regulatory benefits, since no emulsifying salts need to be declared.

In the present process, to accomplish the desired capturing of free calcium ions, a casein-containing milk-based liquid is subjected to a treatment step comprising increasing the temperature of said liquid. In an embodiment, said treatment step comprises increasing the temperature of the liquid to at least 60°C. Generally, the temperature will not be higher than 140°C. Typically, the maximum temperatures chosen reflect a temperature and time profile as used in the art as a sterilization step. Preferably, said treatment step comprises increasing the temperature to 65°C to 95°C, such as 80°C to 90°C. Generally, the treatment is conducted for a duration of at least 2 minutes, such as at least 4 minutes, such as at least 6 minutes, e.g. 8 to 12 minutes, such as about 10 minutes. Generally, at the aforementioned temperatures, the maximum duration does not matter for the presence of calcium ions, once these have been in a captured state, they will remain so captured. It will be understood, that prolonged heating, if not strictly necessary for capturing free calcium ions, is preferably avoided, as prolonged heating may affect the appearance, and ultimately reduce the quality, of a milk-based liquid. Preferably, the treatment step therefore is conducted for at most 60 minutes, such as at most 30 minutes, preferably at most 15 minutes.

The skilled person will be able to straightforwardly test suitable treatment conditions if desired. This can be done by providing one or more samples of 100 mL of the milk-based liquid, increasing the temperature of each sample to a desired value for a desired period of time, and then adding an amount of 100 g of 4% alginate solution. Direct visual inspection will show whether or not immediately fibres are formed or not. In the latter case the conditions chosen are suitable. The foregoing test determines the suitability of the process conditions. It will be understood that in applying these conditions in the process of the invention, the controlled formation of fibres will be accomplished by the addition of an aqueous solution of a divalent metal cation, such as calcium chloride solution, e.g. 4% calcium chloride solution.

As indicated above, the temperature as described is believed to result in dissolved calcium and phosphate, as well as citrate, becoming supersaturated, as a result of which calcium phosphate and/or calcium citrate partly associate with casein micelles. It will be understood that this is based on a reversible process. I.e., if the temperature were allowed to drop to below 60°C, particularly below 50°C, captured calcium ions may become partly liberated again over time. Accordingly, in order to retain a calcium ions-depleted casein liquid, the temperature is preferably kept at or above 60°C when the hydrocolloid capable of precipitating with metal cations is added. Also, the resulting homogenous fibre-generation liquid mass is kept at such a temperature at least until the step of contacting said mass with an aqueous solution comprising divalent or polyvalent metal cations. Another option is to cool down to maximum 30°C and precipitating the mass to fibrous structure sufficiently rapidly, preferably immediately, in order to stay ahead of the reversed process of liberation of calcium-ions.

It has been found that the formation of a fibrous structure can be further improved by an increase in pH to a value of at least 6.8. This pH increase can be conducted at any stage prior to adding the hydrocolloid. However, it is believed that a better effect of the pH increase is achieved by effecting this during, or before, the temperature-increasing step. Preferably, the pH increasing step is conducted during the temperature-increasing step, preferably at a temperature ranging from 7°C to 85°C, more preferably at a temperature ranging from 20°C to 40°C, such as at about 30°C.

Generally, the pH will not be increased to a value higher than 9. Preferably, the pH-increasing step comprises increasing the pH to a value in a range of from 7.0 to 8.0, such as 7.2 to 7.4.

Increasing pH is generally accomplished by adding a base. It will be understood that it is not advisable to use any base that would itself introduce calcium ions, such as $Ca(OH)_2$, or other divalent metal ions capable of complexing with the hydrocolloid to be added. Preferred bases include sodium hydroxide (NaOH) potassium hydroxide (KOH), ammonia, sodium carbonate ($Na_2CO_3$), urea, guanine, monovalent metal oxides, and organic amines such as hexamethylene tetramine.

The pH raise enables the equilibrium

$$Ca^{2+} + H_2PO_4^- \rightarrow CaHPO_4 + H^+$$

to shift to the right-hand side, by capturing protons. As a result, more free calcium ions will be captured as calcium phosphate.

In the present process, the casein-containing milk-based liquid will generally have protein-content of at least 3 wt.%. In fact, it is possible to start from milk as such. Since the hydrocolloid added will, by nature, form a gel with water, it will also form a gel with milk. Still, it is conceivable to add a thickener to the milk. This will serve to obtain a fibrous product that is perceived to be better palatable than if the product's characteristics are dominantly determined by those of the added hydrocolloid (e.g., alginate fibres are generally perceived as too tough to be palatable). Adding a thickener has the benefit that a higher amount of the milk will be captured in an alginate matrix, rather than being drained off upon formation of the fibrous composition.

Food thickeners frequently are based on either polysaccharides (starches, vegetable gums, and pectin), or proteins. This category includes starches as arrowroot, corn starch, katakuri starch, potato starch, sago, wheat flour, almond flour, tapioca and their starch derivatives. Microbial and Vegetable gums used as food thickeners include alginin, guar gum, locust bean gum, and xanthan gum. Proteins used as food thickeners include collagen, egg whites, and gelatine. Sugar polymers include agar, carboxymethyl cellulose, pectin and carrageenan.

It will be understood that a liquid having a relatively low protein content, will result in a fibrous composition having a corresponding relatively low protein content. To this end, the casein-containing liquid preferably has a protein content of at least 5 wt.%, more preferably at least 7.5 wt.%. Generally, the protein content will be up to at most 25 wt.%, preferably at most 20 wt.%, more preferably at most 15 wt.%. A typically preferred protein content is 7.5 wt.% to 12.5 wt.%, such as 10 wt.%. Preferably the protein content is entirely based on milk proteins, more preferably on casein. Preferably, the casein-containing milk-based liquid comprises 5 wt.% to 15 wt.% of casein, more preferably 8 wt.% to 12 wt.% of casein, such as about10 wt.% of casein.

In a preferred embodiment, the casein containing milk-based liquid is obtained by subjecting milk to microfiltration (MF), so as to obtain a filtrate comprising whey proteins and other water soluble components, and a retentate (MF retentate) which comprises the casein fraction of the milk. The retentate typically has a dry matter solids content of 10-40 wt.%, such as 15-25 wt.%, typically 18-22 wt.% such as 20 wt.%, and is a relatively thick liquid mass.

To this end, milk is subjected to such microfiltration as to obtain a casein-containing milk fraction and a whey fraction. Thereby the casein fraction is obtained as a retentate of the microfiltration. Before starting the microfiltration, the milk is subjected to decreaming so as to provide skim milk. Such skim milk generally has a fat content of below 0.1 wt.%, such as 0.04 wt.% to 0.08 wt.%, typically about 0.06 wt.%.

After the process of microfiltering skimmed milk, the retentate can be brought to a desired fat content. This fat content can range from 0% or, e.g., up 2.5 wt.%, in the event that a diet meat replacement (no fat or low fat) is desired. The fat content can also be high, such as 10 wt. to 15 wt.% in the event that a high fat (e.g. pork) meat replacement is desired. In an interesting embodiment, the fat content is brought within a range of 2.5 wt.% to 7.5 wt.%, such as 4-6 wt.%, typically around 5 wt.%. In such embodiments the product is typically suitable as a chicken-like meat replacement. Any type of fat, vegetable fat or cream, can be added. It will be understood that in the event that the product is intended for vegetarians, as a meat replacement, animal fat will not normally be used. Preferably, dairy fat (cream) is used.

In an interesting embodiment, the retentate from microfiltration is not used as such, but is used in the form of casein powder obtained by drying a retentate obtained from microfiltration, typically by evaporation, and dissolving this in water.

As such, the method of separating whey from casein by microfiltration is known. This is sometimes referred to as the cracking of milk. Cracking of milk as a technique is familiar to the skilled person. The applicable microfiltration membranes generally have a pore size in a range of from 0.05μm to 0.25pm, preferably 0.1μm to 0.2pm, preferably 0.1μm.

In carrying out the microfiltration, equipment can be applied with which the person skilled in the art is well familiar. Microfiltration equipment can, e.g., be based on ceramic membranes (Pall, Tami, Atech), or. e.g., polymeric membranes, typically spiral wound polymeric membranes, with membrane housing and pumps conventional in the art. The microfiltration processes can be carried out at a range of temperatures, preferably at most 60°C, such as from 10°C to 60°C, e.g. 50°C to 55°C. Optionally, in addition to microfiltration, a step of diafiltration can be carried out so as to further wash out the obtained concentrate and decrease the whey protein and lactose content of the casein fraction.

The casein containing milk-based liquid can be obtained from milk produced by any dairy animal. This is mostly cattle, and particularly cow (adult female cattle), but in addition to cattle, the following animals provide milk used by humans for dairy products: camels, donkeys, goats, horses, reindeer, sheep, water buffalo, yaks, and moose. Most preferably, the milk used to provide a casein containing milk-based liquid as used in the process of the invention is cow's milk or goat's milk.

After the temperature and, optionally, pH increase, the resulting calcium ions-depleted casein liquid is mixed with a hydrocolloid capable of precipitating with divalent or polyvalent metal cations.

The skilled person is familiar with hydrocolloids that are capable of precipitating with divalent or polyvalent metal cations. Typically, the hydrocolloid is a polysaccharide, preferably selected from pectin with a low methoxyl group content (pectin generally comes in two grades, "high-methoxyl pectin" which generally requires a significant amount of sugar to gel properly, and "low-methoxyl pectin" for which this does not hold), gellan gum and alginate. Alginate, preferably sodium alginate is preferred. A preferred type of calcium-reactive alginate is that of obtained from "Brown algae". The amount of alginate can vary, depending on the desired length of fibres in the fibrous composition, and the desired toughness of the fibres. Generally a range of 0.5 wt.% to 5 wt.% will be applied, such as 1-4 wt.5, preferably 2-3 wt.%.

Typically, the mixing is conducted so as to obtain a homogenous mixture. If desired, an additional homogenization step can be conducted. The resulting liquid, homogenous mass comprises the two components that are essential to, subsequently, carry out a step of precipitation and formation of a fibrous mass. These components are casein, and the hydrocolloid. Various mixing or homogenizing equipment can be used, such as paddle mixers. Preferably a so-called liquiverter is used, i.e., mixing equipment in which mixing takes place under conditions of high shear, resulting in mixing hydrocolloid and water by creating a strong vortex.

If a solution of a metal cation with a valency of at least 2 is added to the homogenous mixture in which there is a low, typically negligible amount of free calcium ions, preferably substantially no free calcium ions, and which contains complexes of milk protein material and a hydrocolloid which precipitates with metal cations of this type, a fibrous product will be obtained in a controlled way by stirring the mass gently (e.g. in a paddle-mixer) and, optionally after washing and removal of excess moisture, has a meat substitute structure. The precipitation of the fibres containing alginate and milk protein is effectuated using an aqueous solution comprising divalent or polyvalent metal cations. Typically, the solution comprises 1 to 10 wt.% of $CaCl_2$., such as 2.5 to 7.5 wt.%, preferably 3 to 5 wt.%, such as about 4 wt.%. In a preferred embodiment, per gram of hydrocolloid, such as per gram of alginate, an amount of dry $CaCl_2$ of 0.2 to 0.4 g of dry is used, such as 0.3 g $CaCl_2$ per gram of alginate. Other suitable salts generally are water-soluble divalent metal ions, such as magnesium acetate or calcium acetate.

The process of the invention results in a product comprising a lower amount of emulsifying salts than in accordance with the prior art process. Preferably, the addition of salts such as such emulsifying salts is avoided altogether, until the final step of formation of the fibrous composition. Accordingly, any salts present in the fibrous composition preferably consist of native milk-based salts. Possibly, residues of the above soluble divalent metal salt can be present.

Accordingly, in a further aspect, not claimed a fibrous composition comprising casein and a hydrocolloid, preferably alginate, obtainable by a process as described hereinbefore is disclosed. Said composition can be described generally as comprising alginate (or other precipitated polysaccharide hydrocolloid) fibres that enclose casein, and any other components enclosed from the casein containing milk-based liquid. The composition deviates from known compositions by comprising 0 to 0.2 wt.% added emulsifying salts, preferably at most 0.1 wt.% and, more preferably, no added emulsifying salts. The composition accordingly is distinguished from known compositions comprising alginate-based fibres and casein as a protein. E.g., the compositions made from curd, such as provided in accordance with the aforementioned WO 03/061400, generally comprise 0.6 wt.% to 1 wt. % of emulsifying salts. Types of emulsifying salts are known to the skilled person. These typically include phosphates and citrates, such as sodium hexametaphosphate.

Preferably, the composition is characterized by not containing added salts, particularly by not containing any emulsifying salts.

The fibrous composition resulting from the process of the invention, is suitable as a meat replacement. It is generally not itself a final product.

If desired, edible components can be added prior to the composition prior to the formation of the fibrous product. Such components can be, e.g., a thickening agent, a filler, or an additional source of fibres. In interesting embodiment, cereal fibres are added such as oat fibres, wheat fibres, corn fibres, and the like.

Further, if desired, additional food ingredients not affecting the fibre-forming capability of the homogenous mass can be added at any stage prior to the step of fibre formation. This particularly refers to seasoning, such as by adding salt and/or spices and/or herbs.

The fibrous composition is suitable to serve as a protein-rich structuring agent in food. The fibres can be provided with spices, aroma's, and other edible and/or nutritional ingredients. The fibrous composition, with any added ingredients, will be formed into a dough, generally together with a binder such as methyl cellulose, chicken egg-white, locust bean gum, carrageenan, or other such edible thickeners familiar to the skilled person. The resulting dough can be shaped as desired, e.g. recognizable as a burger, a schnitzel, smaller pieces such as nuggets or fingers, and other varieties. Before use, the shaped dough generally needs to be heated to a temperature in a range of from 60°C to 80°C, preferably at least 70°C (as this has a pasteurizing effect). The resulting product is suitable to be prepared by heating techniques such as frying, baking, or deep-frying.

After the fibrous composition has been obtained, same can be cut and/or shaped as desired. In such processing steps, further ingredients can be added. Further, it can be desirable to provide the fibrous composition, before, during or after any cutting and/or shaping step, with one or more outside layers. Such outside layers can typically serve to form a crust after frying the resulting composition. This can be, e.g., a batter or a breading. Breading (also known as crumbing) is a

dry grain-derived food coating for a piece of food, usually made from bread crumbs or a breading mixture with seasonings. Breading mixtures can be made, e.g., of breadcrumb, flour, cornmeal, and seasoning that the item to be breaded is dredged in before cooking. In an embodiment, the fibrous composition is first moistened, such as with buttermilk, raw egg, egg wash or other liquid, before breading.

In sum, a process is disclosed for the preparation of a fibrous structure, suitable as a meat replacement. The fibrous structure is formed from a milk-based liquid by precipitation of a hydrocolloid with a divalent salt such as calcium chloride. Free calcium ions in the milk-based liquid are captured by native milk-salts.

The invention will hereinafter be further illustrated with reference to the following, non-limiting examples.

**Example 1**

Ingredients:

casein milk obtained by subjecting skimmed goat milk to microfiltration (using a ceramic membrane of pore size 0.1 μm). The casein milk contains 0.2 wt.% fat, 12.25 wt.% protein and 4.1 wt.% lactose. The dry matter solids content of the casein milk is 17.7 wt.%.;
Alginate: Vivapur® FD175 ex Rettenmaier;
Calcium chloride 4 wt.% aqueous solution;
Sodium hydroxide 10 wt.% aqueous solution.

To 300g of casein milk, sodium hydroxide is added dropwise until a pH of the casein milk is 7.5. The resulting casein milk of pH 7.5 is heated for 10 minutes until the temperature of the casein milk is 80°C. To the heated milk an amount of 200 g of a 4 wt.% aqueous solution of the alginate is added with stirring so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water. Optionally, a small amount of citric acid is added to the washing water. So as to have a 1 wt.% citric acid solution as a washing fluid.

The resulting product can be directly processed in food products, or it can be frozen and stored for later usage.

**Example 2**

Ingredients:

skimmed bovine casein milk powder (obtained from subjecting skimmed bovine milk to microfiltration followed by evaporation). The casein milk powder contains 1 wt.% fat, 67 wt.% protein and 22 wt.% lactose. The dry matter solids content of the casein milk powder 99.6 wt.%.;
Cream obtained from bovine milk, containing 40 wt.% of fat, 2.15 wt.% of protein, and having a dry matter solids content of 44.5 wt.%;
Alginate: Vivapur® FD175 ex Rettenmaier;
Calcium chloride 4 wt.% aqueous solution;
Sodium hydroxide 10 wt.% aqueous solution.
Oat fibre Vitacel® HF 600 ex Rettenmaier (6 g).

To 300 g of warm water (45°C), 60 g of casein milk powder is added. Subsequently, 50 g of cream and 6 g of oat fibre are added. The resulting reconstituted casein milk is heated for 10 minutes until the temperature of the casein milk is 80°C. To the heated milk, 200 g of a 4 wt.% aqueous solution of the alginate is added with stirring, so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed as in Example 1.

**Example 3**

Ingredients:

- Fibrous product obtained in accordance with Example 1;
- Chicken aroma
- Chicken egg white
- Methyl cellulose
- Potassium lactate Purasal® HiPure P
- Batter (obtained from wheat flour)
- Bread crumbs

To 1000 g of fibrous product, 25 g of chicken aroma is added. As a binder, 25 g of chicken egg white and 10 g of methyl cellulose are added. The resulting composition is kneaded at a temperature of between -2°C and 4°C, so as to form a dough. An amount of 20 g of potassium lactate is added as a preservative.

The dough is shaped to form schnitzels of about 100 g each. The shaped schnitzel is provided with a layer of batter and then embedded in a layer of bread crumbs. The resulting product is deep-fried for 1 minute at 180°C. The resulting end-product, which is a meat replacement resembling chicken schnitzel, can be frozen and stored, or can be directly prepared for consumption by frying.

**Example 4**

To 1000 g of fibrous product obtained in accordance with Example 2, 30 g of beef aroma is added. As a binder, 25 g of chicken egg white and 10 g of methyl cellulose are added. The resulting composition is kneaded at a temperature of between -2°C and 4°C below 4°C so as to form a dough. Betanin is added so as to provide the product with a desired colour. An amount of 20 g of potassium lactate is added as a preservative.

The dough is shaped to form hamburgers of about 100 g each. The resulting product can be distributed as a fresh meat-replacement product. Alternatively, the product is heated to 75°C and then frozen.

**Example 5**

Ingredients and procedure are as in Example 1, except that by adding different amounts of sodium hydroxide in a range of test runs, the pH is varied.

The fibres are evaluated with reference to length, weight, and quality. It will be understood that, generally, fibres are formed of different lengths. Fibre length in the present Examples is given as a fibre length number, determined by visual inspection, ranging from 1 to 10. A fibre length number of 1 indicates very short fibres (maximally 2-3 mm), a fibre length number of 10 indicates a large majority of long fibres, up to about 10 cm length.

A longer fibre in this experiment generally reflects a better product. The quality of the process is checked with reference to the loss of whey after formation of the fibrous product. This is determined by the amount of dry matter solids, as a percentage of total dry matter solids, that is lost with process water. A lower loss generally indicates a better process, particularly with a better yield of casein milk components incorporated into the fibres. The lowest pH value in the table is without addition of sodium hydroxide.

The results are depicted in Table 1 below.

Table 1

| pH | Fibre weight (g) | Fibre length number | Whey loss (wt.%) |
|---|---|---|---|
| 6.64 | 305 | 6 | 24 |
| 6.81 | 365 | 7 | 16 |
| 7.03 | 372 | 8 | 12 |
| 7.20 | 383 | 8 | 12 |
| 7.43 | 347 | 9 | 12 |
| 7.59 | 335 | 9 | 13 |
| 7.86 | 335 | 8 | 13 |
| 8.03 | 330 | 9 | 14 |

As can be seen, in all runs fibres are formed. At pH >7 optimal fibre lengths and weights are obtained.

**Example 6**

Ingredients and procedure are generally as in Example 1, with the following exceptions: the pH is not raised (no sodium hydroxide added), and two different temperatures are tested. Further, a higher amount of alginate is added if needed for fibre formation. The latter reflects the unwanted presence of free calcium ions in the casein milk, which ions are captured by complex forming with the additional alginate.

The following results are obtained:
At a temperature of the casein milk of 45°C, fibres are not formed until the alginate concentration is raised to more than 5 wt.%.

At a temperature of 80°C, fibres are formed with a substantially lower excess of alginate, viz. with a 4.5 wt.% alginate solution.

**Example 7**

Ingredients and procedure are as in Example 2, except that the reconstituted casein milk is heated until a temperature of 85°C is reached and that in three runs the pH is varied. The results are evaluated with reference to the fibre weight, length, and quality, as a function of pH. Quality is determined by visual and manual inspection and is rated on a scale from 0 to 10. Thereby 0 indicates a bad quality (short, soft, mushy) and 10 indicates an excellent quality (long, firm, juicy). The lowest pH value in the table is without addition of sodium hydroxide.

The results are depicted in Table 2 below.

Table 2

| pH | Fibre weight (g) | Fibre length number | Fibre quality | Whey loss (wt.%) |
|---|---|---|---|---|
| 6.59 | 274 | 3 | 2 | 27 |
| 7.07 | 274 | 6 | 6 | 22 |
| 7.65 | 261 | 7 | 8 | 22 |

As can be seen, without pH raise, in all runs fibres are formed, but the fibres without pH raise are short and of sub-optimal quality. Also, the whey loss thereby is relatively high. At pH >7 optimal fibre lengths and weights are obtained. In terms of both fibre weight and process quality, the results are outperformed by those obtained with casein milk obtained from a microfiltration process.

**Example 8:**

Ingredients:

casein milk as in Example 1;
4g of oat fibre;
9g of alginate: DMB (alginate ex FMC Biopolymer) or Rettenmaier Vivapur® RD175).
200 mL of water to dissolve alginate;
180g of calcium chloride 4 wt.% aqueous solution;
2 of sodium hydroxide 8 wt.% aqueous solution;
10g of 10% solution of emulsifying salt (sodium hexametaphosphate).

Tests are run with making fibrous compositions generally as in Example 1, with the following parameters varied:

(A) Alginate DMB :
(B) Alginate Vivapur®FD 175;

(1) heating to 60°C (heating at 1000W for 1 minute and 20 seconds);
(2) heating to 85°C (heating at 1000W for 2 minute and 10 seconds);

The pH is not changed (no addition of base, pH about 6.75), no emulsifying salts are added.

Batches of the casein milk are heated to 60°C of 80°C. To 300 mL heated casein milk, an varying amount of a 4

wt.% aqueous solution of either of the alginates is added with stirring so as to obtain a viscous paste. To the viscous paste 180 ml. of the calcium chloride solution is added. Upon gentle stirring, the alginate forms a fibrous substance with the non-soluble substances from the casein milk. The results are depicted in Table 3 below.

Table 3

| Alginate | Temperature (°C) | Fibre weight (g) | Fibre length number | Fibre quality | Whey loss (wt.%) |
|---|---|---|---|---|---|
| (A) | 60 | 315 | 7 | 5 | 33 |
| (B) | 60 | 324 | 7 | 5 | 34 |
| (A) | 85 | 375 | 9 | 7 | 18 |
| (B) | 85 | 324 | 8 | 7 | 22 |

As can be seen, in the event that the casein milk is heated to 60°C, fibres can be formed without increasing pH and without adding emulsifying salts. Whey loss is relatively high, and the fibres are relatively short. Improved fibres are obtaid, and at a much lower whey loss, in the event of heating the casein milk to 85°C.

**Example 9**

Procedure

A caseinate solution is formed by dissolving 40 g of sodium caseinate (DMV Excellion® Sodium Caseinate) in 260 g of warm (50°C) water. With or without the additional steps, as explained below for the different experimental runs, the caseinate solution is mixed with 200 g of 4% alginate solution (Vivapur®FD175). After mixing, 180 ml of a 4% calcium chloride solution is added, with gentle stirring, in order to form a fibrous mass. The obtained fibres are evaluated for fibre length number, and the percentage protein loss is determined.

Experimental runs:

In run #1 no additive and no treatment, before adding the alginate;
In runs #2 to #8, the following steps are taken prior to adding the alginate:

#2 temperature increased to 85°C (at least 5 minutes);
#3 addition of 10 mL of 10% sodium hexametaphosphate solution;
#4 temperature + salt (steps of #2 and #3 combined);
#5 pH increased to about 8;
#6 temperature + pH (steps of #2 and #5 combined);
#7 pH + salt (steps of #3 and #5 combined);
#8 temperature + pH + salt (steps of #3 and #6 combined);

Results

The results are depicted in Table 4 below:

Table 4

| Run# | Phosphate salt added | Increase temperature | Increase pH | Fiber length number | Protein loss |
|---|---|---|---|---|---|
| 1 | - | - | - | 6 | 2.27 (8) |
| 2 | - | + | - | 8 | 1.65 (4) |
| 3 | + | - | - | 7 | 1.72 (6) |
| 4 | + | + | - | 8 | 1.63 (3) |
| 5 | - | - | + | 5 | 2.02 (7) |
| 6 | - | + | + | 8 | 1.50 (2) |

(continued)

| Run# | Phosphate salt added | Increase temperature | Increase pH | Fiber length number | Protein loss |
|---|---|---|---|---|---|
| 7 | + | - | + | 7 | 1.69 (5) |
| 8 | + | + | + | 7 | 1.49 (1) |

**Example 10**

Ingredients:

A milk protein retentate obtained by subjecting skimmed goat milk to ultrafiltration. The UF retentate contains 0.2 wt.% fat, 10 wt.% protein and 4.1 wt.% lactose. The dry matter solids content of the UF retentate is 15.5 wt.%.;

Alginate: Vivapur® FD175 ex Rettenmaier;
Calcium chloride 4 wt.% aqueous solution;
Sodium hydroxide 10 wt.% aqueous solution.

To 300g of UF retentate, sodium hydroxide is added dropwise until the pH of the UF retentate is 7.6. The resulting casein milk of pH 7.6 is heated for 15 minutes until the temperature of the retentate is 85°C. To the heated milk an amount of 200 g of a 4 wt.% aqueous solution of the alginate is added with stirring so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water. Optionally, a small amount of citric acid is added to the washing water. So as to have a 1 wt.% citric acid solution as a washing fluid.

The resulting product can be directly processed in food products, or it can be frozen and stored for later usage.

**Example 11**

Ingredients:

skimmed bovine milk protein powder (obtained from subjecting skimmed bovine milk to ultrafiltration followed by evaporation). The UF milk powder contains 1.2 wt.% fat, 64 wt.% protein and 26 wt.% lactose. The dry matter solids content of the UF milk powder is 99.6 wt.%.;

Cream obtained from bovine milk, containing 40 wt.% of fat, 2.15 wt.% of protein, and having a dry matter solids content of 44.5 wt.%;
Alginate: Vivapur® FD175 ex Rettenmaier;
Calcium chloride 4 wt.% aqueous solution;
Sodium hydroxide 10 wt.% aqueous solution.
Oat fibre Vitacel® HF 600 ex Rettenmaier (6 g).

To 300 g of warm water (45°C), 60 g of milk protein powder is added. Subsequently, 50 g of cream and 6 g of oat fibre are added. The resulting reconstituted milk protein liquid is heated for 8 minutes until the temperature of the casein milk is 75°C. To the heated milk, 200 g of a 4 wt.% aqueous solution of the alginate is added with stirring, so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed as in Example 1.

**Claims**

**1.** A process for the preparation of a fibrous composition, the process comprising

(i) providing a casein-containing milk-based liquid;
(ii) subjecting said liquid to a treatment step to capture free calcium ions present in said fluid, thereby obtaining a calcium ions-depleted casein liquid;

(iii) adding a hydrocolloid capable of precipitating with divalent or polyvalent metal cations to the calcium ions-depleted casein liquid, with mixing and homogenizing so as to obtain a homogenous fibre-generation liquid mass;
(iv), contacting the fibre-generation liquid mass with an aqueous solution comprising divalent or polyvalent metal cations, thereby forming fibres; wherein said treatment step comprises increasing the temperature of said liquid to at least 60°C, thereby enabling native milk phosphate to capture free calcium ions.

**2.** A process according to claim 1, wherein the treatment step comprises increasing the temperature of the liquid to, 65°C to 95°C.

**3.** A process according to claim 2, comprising increasing the temperature to 80°C to 90°C.

**4.** A process according to any one of the preceding claims, wherein the treatment step comprises increasing the pH of the liquid to a value of at least 6.8.

**5.** A process according to claim 4, wherein the pH is 7.0 to 8.0, such as 7.2 to 7.4.

**6.** A process according to claim 4 or 5, wherein the pH increasing step is conducted during the temperature-increasing step, preferably at a temperature ranging from 7°C to 85°C.

**7.** A process according to claim 6, wherein the pH increasing step is conducted at a temperature ranging from 20°C to 40°C.

**8.** A process according to any one of the preceding claims, wherein the casein-containing liquid has a protein content of 5 wt.% to 15 wt.%, preferably 7.5 wt.% to 12.5 wt.%.

**9.** A process according to any one of the preceding claims, wherein the casein-containing liquid has a casein content of 8 wt.% to 12 wt.%.

**10.** A process according to any one of the preceding claims, wherein the casein-containing milk-based liquid is selected from the group consisting of concentrated milk, dissolved milk powder, dissolved sodium caseinate, dissolved milk protein powder obtained from subjecting milk to ultrafiltration, a retentate obtained by subjecting milk to ultrafiltration, dissolved casein powder obtained from subjecting milk to microfiltration, a retentate obtained by subjecting milk to microfiltration, and mixtures thereof.

**11.** A process according to claim 10, wherein the casein-containing milk-based liquid is selected from the group consisting of
concentrated milk, dissolved milk powder, dissolved casein powder obtained from subjecting milk to microfiltration, a retentate obtained by subjecting milk to microfiltration, and mixtures thereof.

**12.** A process according to claim 10, wherein the casein-containing milk-based liquid is sodium caseinate dissolved in water.

**13.** A process according to any one of the preceding claims, wherein the hydrocolloid is an alginate.

**14.** A process according to any one of the preceding claims, wherein the divalent metal cations are calcium ions.

## Patentansprüche

**1.** Verfahren zur Herstellung einer faserigen Zusammensetzung, wobei das Verfahren umfasst:

(i) Bereitstellen einer kaseinhaltigen Flüssigkeit auf Milchbasis;
(ii) Unterziehen der Flüssigkeit einem Behandlungsschritt, um in der Flüssigkeit vorhandene freie Calciumionen einzufangen, wodurch eine an Calciumionen verringerte Kaseinflüssigkeit erhalten wird;
(iii) Zugeben eines Hydrokolloids, das geeignet ist, mit zwei- oder mehrwertigen Metallkationen zu präzipitieren, zu der an Calciumionen verringerten Kaseinflüssigkeit unter Mischen und Homogenisieren, um so eine homogene faserbildende flüssige Masse zu erhalten;
(iv) Inkontaktbringen der faserbildenden flüssigen Masse mit einer wässrigen Lösung, umfassend zwei- oder

mehrwertige Metallkationen, wodurch Fasern gebildet werden; wobei der Behandlungsschritt Erhöhen der Temperatur der Flüssigkeit auf mindestens 60°C umfasst, wodurch dem nativen Milchphosphat ermöglicht wird, freie Calciumionen einzufangen.

**2.** Verfahren nach Anspruch 1, wobei der Behandlungsschritt Erhöhen der Temperatur der Flüssigkeit auf 65°C bis 95°C umfasst.

**3.** Verfahren nach Anspruch 2, umfassend Erhöhen der Temperatur auf 80°C bis 90°C.

**4.** Verfahren nach einem der vorhergehenden Ansprüche, wobei der Behandlungsschritt Erhöhen des pH-Wertes der Flüssigkeit auf einen Wert von mindestens 6,8 umfasst.

**5.** Verfahren nach Anspruch 4, wobei der pH-Wert 7,0 bis 8,0, wie z.B. 7,2 bis 7,4, ist.

**6.** Verfahren nach Anspruch 4 oder 5, wobei der pH erhöhende Schritt während des Temperatur erhöhenden Schritts durchgeführt wird, vorzugsweise bei einer Temperatur im Bereich von 7°C bis 85°C.

**7.** Verfahren nach Anspruch 6, wobei der Schritt der pH-Erhöhung bei einer Temperatur im Bereich von 20°C bis 40°C durchgeführt wird.

**8.** Verfahren nach einem der vorhergehenden Ansprüche, wobei die kaseinhaltige Flüssigkeit einen Proteingehalt von 5 Gew.-% bis 15 Gew.-%, vorzugsweise 7,5 Gew.-% bis 12,5 Gew.-% hat.

**9.** Verfahren nach einem der vorhergehenden Ansprüche, wobei die kaseinhaltige Flüssigkeit einen Kaseingehalt von 8 Gew.-% bis 12 Gew.-% hat.

**10.** Verfahren nach einem der vorhergehenden Ansprüche, wobei die kaseinhaltige Flüssigkeit auf Milchbasis ausgewählt ist aus der Gruppe bestehend aus konzentrierter Milch, gelöstem Milchpulver, gelöstem Natriumkaseinat, gelöstem Milchproteinpulver, erhalten durch Unterziehen von Milch einer Ultrafiltration, einem Retentat, erhalten durch Unterziehen von Milch einer Ultrafiltration, gelöstem Kaseinpulver, erhalten durch Unterziehen von Milch einer Mikrofiltration, einem Retentat, erhalten durch Unterziehen von Milch einer Mikrofiltration, und Gemischen davon.

**11.** Verfahren nach Anspruch 10, wobei die kaseinhaltige Flüssigkeit auf Milchbasis ausgewählt ist aus der Gruppe bestehend aus konzentrierter Milch, gelöstem Milchpulver, gelöstem Kaseinpulver, erhalten durch Unterziehen von Milch der Mikrofiltration, einem Retentat, erhalten durch Unterziehen der Milch der Mikrofiltration, und Gemischen davon.

**12.** Verfahren nach Anspruch 10, wobei die kaseinhaltige Flüssigkeit auf Milchbasis in Wasser gelöstes Natriumkaseinat ist.

**13.** Verfahren nach einem der vorhergehenden Ansprüche, wobei das Hydrokolloid ein Alginat ist.

**14.** Verfahren nach einem der vorhergehenden Ansprüche, wobei die zweiwertigen Metallkationen Calciumionen sind.

**Revendications**

**1.** Procédé de préparation d'une composition fibreuse, le procédé comprenant les étapes consistant à :

(i) fournir un liquide à base de lait contenant de la caséine ;
(ii) soumettre ledit liquide à une étape de traitement pour capturer des ions de calcium libres présents dans ledit fluide, obtenant ainsi un liquide de caséine appauvri en ions de calcium ;
(iii) ajouter un hydrocolloïde capable de précipiter avec des cations métalliques divalents ou polyvalents au liquide de caséine appauvri en ions de calcium, avec mélange et homogénéisation de manière à obtenir une masse liquide de génération de fibre homogène ;
(iv) la mise en contact de la masse liquide de génération de fibres avec une solution aqueuse comprenant des cations métalliques divalents ou polyvalents, formant ainsi des fibres ; dans lequel ladite étape de traitement comprend l'augmentation de la température dudit liquide à au moins 60°C, permettant ainsi au phosphate de lait

natif de capturer des ions de calcium libres.

2. Procédé selon la revendication 1, dans lequel l'étape de traitement comprend l'augmentation de la température du liquide à 65°C à 95°C.

3. Procédé selon la revendication 2, comprenant l'augmentation de la température à 80°C à 90°C.

4. Procédé selon l'une quelconque des revendications précédentes, dans lequel l'étape de traitement comprend l'augmentation du pH du liquide à une valeur d'au moins 6,8.

5. Procédé selon la revendication 4, dans lequel le pH est de 7,0 à 8. 0, tel que 7,2 à 7,4.

6. Procédé selon la revendication 4 ou 5, dans lequel l'étape d'augmentation du pH est effectuée pendant l'étape d'augmentation de température, de préférence à une température allant de 7°C à 85°C.

7. Procédé selon la revendication 6, dans lequel l'étape d'augmentation du pH est effectuée à une température allant de 20°C à 40°C.

8. Procédé selon l'une quelconque des revendications précédentes, dans lequel le liquide contenant de la caséine a une teneur en protéines de 5% en poids à 15% en poids, de préférence de 7,5% en poids à 12,5% en poids.

9. Procédé selon l'une quelconque des revendications précédentes, dans lequel le liquide contenant de la caséine a une teneur en caséine de 8% en poids à 12% en poids.

10. Procédé selon l'une quelconque des revendications précédentes, dans lequel le liquide à base de lait contenant de la caséine est choisi dans le groupe constitué par le lait concentré, la poudre de lait dissous, le caséinate de sodium dissous, la poudre de protéine de lait dissous obtenue à partir de la soumission du lait à une ultrafiltration, un rétentat obtenu en soumettant du lait à une ultrafiltration, une poudre de caséine dissoute obtenue à partir de la soumission du lait à une microfiltration, un rétentat obtenu en soumettant du lait à une microfiltration, et des mélanges de ceux-ci.

11. Procédé selon la revendication 10, dans lequel le liquide à base de lait contenant de la caséine est choisi dans le groupe constitué par le lait concentré, la poudre de lait dissous, la poudre de caséine dissoute obtenue à partir de la soumission du lait à une microfiltration, un rétentat obtenu en soumettant du lait à une microfiltration, et des mélanges de ceux-ci.

12. Procédé selon la revendication 10, dans lequel le liquide à base de lait contenant de la caséine est du caséinate de sodium dissous dans de l'eau.

13. Procédé selon l'une quelconque des revendications précédentes, dans lequel l'hydrocolloïde est un alginate.

14. Procédé selon l'une quelconque des revendications précédentes, dans lequel les cations métalliques divalents sont des ions de calcium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03061400 A
- EP 1588626 A
- EP 1643850 A
- EP 1643851 A
- EP 1771085 A
- US 20150351427 A
- SE 375227
- US 2011171359 A
- EP 1759593 A
- AU 2008200828
- WO 2005004624 A
- WO 2005004623 A